# EUROPEAN PATENT SPECIFICATION

(11) **EP 4 569 219 B1**
(45) Date of publication and mention of the grant of the patent: **16.09.2026**
(21) Application number: 23772908.2
(22) Date of filing: 26.09.2023
(51) Int. Cl.: F03D 7/02, F03D 7/04, F03D 9/25, H02J 3/38

(54) **OPERATING WIND TURBINES IN A MICROGRID**
BETRIEB VON WINDTURBINEN IN EINEM MIKRONETZ
FONCTIONNEMENT D'ÉOLIENNES DANS UN MICRO-RÉSEAU

(30) Priority: 20.10.2022 EP 22202687
(43) Date of publication of application: 18.06.2025
(73) Proprietor: Siemens Gamesa Renewable Energy A/S, 7330 Brande (DK)
(72) Inventor: ANDERSEN, Claus, 7400 Herning (DK); STOETTRUP, Michael, 7400 Herning (DK)
(74) Representative: SGRE-Association
(86) International application number: PCT/EP2023/076481
(87) International publication number: WO 2024/083456

(56) References cited:
- EP-A1- 3 533 996
- WO-A1-2014/071948
- WO-A1-2021/023356
- US-A1- 2011 140 428
- US-A1- 2017 002 796
- BADIHI HAMED ET AL: "A Comprehensive Review on Signal-Based and Model-Based Condition Monitoring of Wind Turbines: Fault Diagnosis and Lifetime Prognosis", PROCEEDINGS OF THE IEEE, IEEE. NEW YORK, US, vol. 110, no. 6, 1 June 2022 (2022-06-01), pages 754 - 806, XP011910271, ISSN: 0018-9219, [retrieved on 20220513], DOI: 10.1109/JPROC.2022.3171691

## Description

### Field of invention

The present invention relates to a method of operating plural wind turbines connected to a local grid but isolated from any power providing utility grid and further relates to a corresponding arrangement. Still further, the present invention relates to a system comprising at least two wind turbines and the arrangement.

### Art Background

One example of an isolated local grid may be an offshore wind park when the electrical connection to the onshore electrical network is interrupted. When the offshore electrical grid is started up, several wind turbines will produce electric power (active or reactive power) to help support the consumers, for example other wind turbines, in the small electrical local grid while the wind speed may allow the turbines to produce electrical power. The balance between electrical power production and power consumption must always be maintained in the electrical local grid. Otherwise, the frequency will either be increasing or decreasing until the local grid collapses.

There may be a need for a method and a corresponding arrangement of operating plural wind turbines connected to a local grid but isolated from any power providing utility grid, wherein the stability of the local grid may be improved and where performance of the local grid may be improved, such that in particular it is enabled to efficiently operate the local grid and in particular to start up the needed number of wind turbines even in the isolated state disconnected from any energy providing utility grid and/or to support also idle wind turbines regarding temporary stops.

Documents providing background information are:
WO 2014/071948 A1 (VESTAS WIND SYS AS [DK]) 15 May 2014 (2014-05-15);
BADIHI HAMED ET AL: "A Comprehensive Review on Signal-Based and Model-Based Condition Monitoring of Wind Turbines: Fault Diagnosis and Lifetime Prognosis", PROCEEDINGS OF THE IEEE, IEEE. NEW YORK, US, vol. 110, no. 6, 1 June 2022 (2022-06-01), pages 754-806, XP011910271, ISSN: 0018-9219, DOI: 10.1109/JPROC.2022.3171691 [retrieved on 2022-05-13];
US 2017/002796 A1 (SPRUCE CHRIS [GB] ET AL) 5 January 2017 (2017-01-05);
US 2011/140428 A1 (WAKATA DAISUKE [JP] ET AL) 16 June 2011 (2011-06-16);
EP 3 533 996 A1 (SIEMENS GAMESA RENEWABLE ENERGY AS [DK]) 4 September 2019 (2019-09-04);
WO 2021/023356 A1 (MHI VESTAS OFFSHORE WIND AS [DK]) 11 February 2021 (2021-02-11)

### Summary of the Invention

This need may be met by the subject matter according to the independent claims. Advantageous embodiments of the present invention are described by the dependent claims.

According to an embodiment of the present invention it is provided a method of operating plural wind turbines connected to a local grid but isolated from any power providing utility grid, the method comprising monitoring the wind turbines regarding at least one temporary stop requirement; selecting one or more of the wind turbines based on a closeness to the respective temporary stops, in particular the lower the closeness the more urgent temporary stops; entering, by at least one selected wind turbine or by at least one non-selected wind turbine, a non-idle state thereby suppling power to the local grid.

The closeness may be based on or is determined based on at least one of a remaining time duration until a next temporary stop of at least one component will be required, and/or an elapsed time since a previous temporary stop of at least one component was performed.

The closeness may be expressed in different units or may be expressed as a closeness level or closeness score being for example without any physical unit. In one example, the closeness is expressed in the unit of a time. The closeness may be predicted from the monitoring data thereby also for example considering an expected lifetime or expected operational capacity of one or more of the components of the wind turbines. For example, from historic operational data it might then be predicted when each of the plural wind turbines require the next temporary stop. The closeness could also be based on deterministic temporary stop periods, e.g. caused by lubrication of components. Determining the closeness may further allow to derive a ranking of the wind turbines regarding urgency of required temporary stop.

The plural wind turbines may comprise two or more wind turbines, in particular a subset of a wind park or an entire wind park. Each of the plural wind turbines are directly or indirectly connected to each other within the local grid. The local grid may for example be operated at a medium voltage range, such as for example between 20 kV and 200 kV. The local grid is disconnected from any power providing utility grid such that the local grid does not receive any electrical power from any power providing utility grid. In this sense, the local grid is isolated or islanded.

The method may be implemented in software and/or hardware and may be performed by one or more units involving for example one or more of the plural wind turbines, for example a control unit or a control portion which has processing capabilities for executing at least the selection step. The control portion may also be communicatively connected to the wind turbines in order to send respective operation control signals for commanding the wind turbines to either enter an idle state or a non-idle state.

The control portion may also be communicatively connected to the wind turbines in order to receive monitoring data regarding the respective temporary stop requirements of the respective wind turbines. Thus, monitoring the wind turbines may involve receiving measurement data and/or configuration data and/or operational state data from one or more, in particular all, of the plural wind turbines. The monitoring data may comprise sensor data and/or historic operational data and/or operational state data of the respective wind turbines. The monitoring data may further comprise one or more thresholds defining operational limits with respect to remaining operating time, elapsed operating time, elapsed operating capacity, remaining operating capacity and so forth.

The control unit may process the monitoring data in order to derive a closeness, in particular a closeness level (as explained below in detail) which indicates how close ("distance") the respective wind turbine is to a respective temporary stop requirement. The closeness may be expressed in different units or may be expressed as a closeness level or closeness score being for example without any physical unit. In one example, the closeness is expressed in the unit of a time. The closeness may be predicted from the monitoring data thereby also for example considering an expected lifetime or expected operational capacity of one or more of the components of the wind turbines. For example, from historic operational data it might then be predicted when each of the plural wind turbines require the next temporary stop. The closeness could also be based on deterministic temporary stop periods, e.g. caused by lubrication of components. Determining the closeness may further allow to derive a ranking of the wind turbines regarding urgency of required temporary stop.

The temporary stop may be required e.g. due to a regular or conditional maintenance service to be performed at at least one component of the wind turbine.

The selection step may either select those wind turbines which are to enter a non-idle state or those wind turbines which are to enter an idle state based on the closeness. In one embodiment, those wind turbines are selected based on the closeness to the respective temporary stop requirements that are to enter the non-idle state in order to provide or supply electrical power into the local grid. In particular, those wind turbines may be selected for entering the non-idle state for which the temporary stop is farthest away in the future or is at least expected to be farthest away in the future. Thus, those selected wind turbines are expected to not require a temporary stop at least in a predetermined time range in the future such that they are capable of supplying electrical energy to the local grid. In this embodiment, the non-selected wind turbines are to enter the idle state or to remain or stay in the idle state, since for those non-selected wind turbines, the temporary stop may be more urgent or may be required in the near future. When the selected wind turbine or several of the selected wind turbines enter the non-idle state it may involve to starting up those wind turbines in order to for example direct the rotor into the wind in order to produce electrical energy which is output to the local grid. The idle wind turbines may then consume or receive some of the power provided by the non-idle wind turbines. Due to the rational selection of the wind turbines it may be ensured that the local grid has a relatively stable voltage and/or frequency such that it may be avoided that the local grid collapses.

Thus, embodiments of the present invention address the selection of wind turbines used for providing electric energy to a microgrid or a local grid. The local grid or microgrid may be characterised by being supplied by a few energy sources that always need to keep a balance between energy production and consumption. If that balance is not achieved, then the local grid or microgrid may collapse due to frequency runaway, which may be avoided according to embodiments of the present invention.

Wind turbines may periodically need to stop for example for lubrication (providing lubricant) of the pitch system or to untwist the tower cable. The pitch lubrication is an example of an operation where the wind turbine stops to take an action to prevent unnecessary wear of the pitch bearing and the untwisting of the power cable is an example of an operation where the turbine stops to perform an action that prevents a mechanical component of exceeding its operation range. Those types of stops are also referred to as a periodic service stop.

The closeness to the respective temporary stop requirements may respect the periodic service stops needed to be performed by the different wind turbines. For example, if the next service stop of a particular wind turbine is relatively soon, the closeness will have for example a low value. In the other situation when the periodic stop is at a point in time relatively far away in the future, the closeness may have a relatively high value for this wind turbine. In other embodiments, the closeness may respect one or more other temporary stop requirements which may be measured in different physical quantities. The closeness may combine different temporary stop requirements of different components or portions of the wind turbine in one quantity, in particular a closeness score or a closeness level.

According to embodiments of the present invention, a conventionally observed risk can be avoided when a wind turbine stops for a periodic service stop which requires to stop electric power supply to the local grid. In this conventional scenario, the balance between power production and power consumption within the microgrid or local grid may not be longer maintained by the remaining power producing wind turbines in the island.

According to an embodiment of the present invention, the method further comprises at least one of operating non-selected wind turbines, if any, in an idle-state thereby not suppling power to the local grid; and receiving power from the local grid at at least one of the idle wind turbines.

The non-selected wind turbines may be commanded to operate in the idle state, since they may be known to be not reliable power producing wind turbines since they may require temporary stop relatively urgently (at least compared to the selected wind turbines which are entering the non-idle state). The idle wind turbines may then receive power from the local grid, in order to actually allow performing the required temporary stop and/or to secure a reliable and safe operation even in the idle state.

According to an embodiment of the present invention, selecting one or more of the wind turbines comprises selecting one or more of the wind turbines whose closeness to the respective temporary stop requirement is greatest or greater than a threshold, the threshold in particular depending on a wind speed and/or total number of wind turbines.

When the closeness is relatively great or greater than a threshold, the urgency for a temporary stop may be relatively low. Thus, basing the selection on the closeness being relatively great or greater than a threshold, may ensure that the selected wind turbines in fact are capable of producing power for a considerable time range in order to supply the power to the local grid, thereby improving stability of the local grid.

According to an embodiment of the present invention, selecting one or more of the wind turbines comprises selecting a number of one or more of the wind turbines such that electrical power production supplied by the non-idle wind turbines and electrical power consumption by the idle wind turbines is substantially balanced within the local grid, wherein in particular the minimum number of wind turbines supplying power to the local grid might depend on wind speed.

The aforementioned threshold may in embodiments also depend on the power requirement within the local grid and may in particular depend on the number of total wind turbines and also may depend on the wind speed. For example, so many wind turbines may be selected for entering the non-idle state in order to produce electrical power, such that the produced electrical power is sufficient, depending on the actual wind speed, in order to satisfy the power requirements of the idle wind turbines.

The selection may be updated in a regular or periodic or continuous manner. The method may for example also involve monitoring the total amount of produced power and supplied to the microgrid and also the total amount of power consumed by the idle wind turbines and/or also the non-idle wind turbines. In this respect, the wind turbines may also provide measurement data regarding power output or power consumption to a control portion which for example performs the selection step and also sends out control signals to the wind turbines.

According to an embodiment of the present invention, the method further comprises determining, for each of the wind turbines, a closeness level and/or closeness score based on respective the temporary stop requirement; selecting one or more of the wind turbines based on the closeness level, wherein the closeness level is a binary quantity or is quantized in more than two values, in particular in a continuous manner.

The closeness level and/or closeness score may indicate how close the respective wind turbine is to a temporary stop requirement. The level or score may be provided in a physical unit, such as time, or may be provided as a quantity without a unit. In a very simple embodiment, the closeness level may have only two possible values which may simplify the method. However, it may be advantageous to determine a closeness level having more than two possible values in order to have more flexibility and priority regarding the number of wind turbines which may be selected. The closeness level may allow to determine a ranked order of the wind turbines regarding service maintenance requirement.

According to an embodiment of the present invention, the closeness score respects a weighting of several components or wind turbines regarding predictability and/or importance and/or vulnerability.

The weighting may allow to prioritize one component or a service requirement of one component compared to another component. Further, some of the temporary stops may be less important and/or predictable than other temporary stops. This may also be captured within the closeness score or closeness level. Thereby, great flexibility may be provided and respecting plural temporary stops of plural components of the wind turbines.

According to an embodiment of the present invention, the method further comprises at least one of establishing a ranked order of the wind turbines based on the closeness level of the wind turbines; selecting wind turbines to enter the non-idle state based on the ranked order; choosing wind turbines to enter the idle state and/or to perform maintenance based on the ranked order.

The ranked order may advantageously be used for selecting those wind turbines which should enter the non-idle state and/or choosing those wind turbines which are to enter an idle state. For example, when the ranked order is from low closeness score to high closeness score, the wind turbines ordered at an end portion or e.g. end half of the ordered list may be selected to enter the non-idle state and the wind turbines in the beginning portion may be selected to enter the idle state. Thereby, the selection may be simplified.

According to an embodiment of the present invention, the closeness level of the temporary stop requirement is based on or is determined based on at least one of a remaining time duration until a next temporary stop of at least one component will be required; an elapsed time since a previous temporary stop of at least one component was performed; a remaining load level at least one component can be subjected to in the future; an accumulated load level at least one component was subjected to (in the past); an amount of degrees of rotation the nacelle was rotated, since a previous untwist operation; an amount of degrees of rotation the nacelle can be rotated in the future, until a next untwist operation will be required, wherein the closeness level respects in particular at least one operation threshold, in particular operation time threshold and/or wear level threshold.

Thereby, a great flexibility is provided for determining the closeness level. Other criteria may be respected as well.

According to an embodiment of the present invention, monitoring the wind turbines regarding at least one temporary stop requirement comprises at least one of: receiving measurement data regarding an operation state and/or performance and/or lifetime of at least one wind turbine component; receiving at least one operation threshold regarding operation of the component; determining the closeness level based on the measurement data and/or the operation threshold.

The measurement data may for example be provided by wind turbine sensors installed at one or more locations at one or more components of the wind turbine. The operation thresholds may be taken from for example an electronic storage comprised in the wind turbine or may be taken from a central storage holding configuration and design data for the wind turbines. Thereby, the particular configuration of the wind turbine may be respected and in particular operation thresholds may be met.

According to an embodiment of the present invention, the temporary stop includes at least one of lubrication of at least one component of the wind turbine, in particular a gear system and/or a pitching system and/or a yawing system; untwisting a power cable, in particular arranged in a wind turbine tower; stopping the wind turbine; performing temporary stop on at least one component of the wind turbine.

According to an embodiment of the present invention, the temporary stop includes at least a temperature measurement of a component or fluid in the turbine, in particular the hydraulic oil temperature that needs to be within an operational range defined by an upper and lower temperature value. The distance is the minimum absolute difference between the measured or estimated temperature and the boundaries of the operational range.

According to an embodiment of the present invention, the method further comprises at least one of, in particular if the local grid is electrically stable: performing temporary stop for at least one idle wind turbine, in particular in a ranked order giving priority to those that having smallest closeness level; updating the closeness level of the idle wind turbine after having performed the temporary stop, in particular updating the rank of the wind turbine in the ordered list, wherein performing the temporary stop of a wind turbine in particular increases the closeness level, thereby lowering urgency level for temporary stop of the respective wind turbine.

Thereby, conventionally performed temporary stops are supported by embodiments of the present invention. When the temporary stop is actually performed at least for one or more of the idle wind turbines, they may be prepared for supplying power to the local grid after having being started. For example, the selection step may be updated upon performing any temporary stop of any of the idle wind turbines. It may then turn out that the previously idle wind turbine now, after the temporary stop is completed, will be selected as a wind turbine which should enter a non-idle state, in order to supply electrical power to the local grid. In the meantime, one of the previously selected wind turbines which had actually supplied electrical power to the local grid may have a lower closeness score or level than previously and this wind turbine(s) may then be selected to enter an idle state.

Thus, the wind turbines which are commanded to produce electrical power and provided to the local grid may dynamically be determined such that the electrical stability of the local grid may be ensured.

According to an embodiment of the present invention, the method further comprises at least one of, in particular in a regular manner updating closeness level of the wind turbines; updating selection of the wind turbines to enter non-idle state; supplying power to the local grid by wind turbines according to updated selection and/or updated closeness level; performing temporary stop of idle wind turbines based on the updated closeness level.

Thereby, changing capabilities of the wind turbines regarding supplying reliable power to the local grid may be monitored or observed or detected.

Entering the non-idle state may involve to operate the yaw system and/or the pitch system in order to direct the wind turbine towards the wind and also appropriately adjust the pitch angle of the rotor blades in order to effectively capture the wind power. The local grid connected wind turbines may in an initial situation be in an idle state, for example, or some wind turbines may already be in a non-idle state supplying power to the grid. Then, a dynamic selection of wind turbines based on the closeness obtained from the temporary stop requirement may be performed.

According to an embodiment of the present invention, the plural wind turbines comprise one of two or more wind turbines; a subset of wind park wind turbines; all wind turbines of a wind park; and/or wherein the idle-state of wind turbine includes at least one of wind turbine is stopped; rotor is slowly rotating; wind turbine does not supply power to the local grid; and/or the closeness level indicates at least one of a "distance" to a next temporary stop; an urgency level for performing a temporary stop. Thereby, the method may be flexibly applied to any group of wind turbines.

It should be understood, that features, individually or in any combination, disclosed, explained, provided or applied to a method of operating plural wind turbines connected to a local grid but isolated from any power providing utility grid, may, individually or in any combination, also apply to or provided for an arrangement for operating plural wind turbines according to embodiments of the present invention and vice versa.

According to an embodiment of the present invention it is provided an arrangement for operating plural wind turbines connected to a local grid but disconnected from a utility grid, the arrangement comprising: an input port for receiving monitoring data of the wind turbines regarding at least one temporary stop requirement; a processor adapted to select one or more of the wind turbines based on a closeness to the respective temporary stop requirement; an output port for supplying a control signal to at least one selected wind turbine or to at least one non-selected wind turbine, to enter a non-idle state thereby suppling power to the local grid.

The arrangement may be implemented in software and/or hardware. The arrangement may in particular be a portion of a control unit, in particular a park controller or a controller for at least controlling a subset of wind turbines of a wind park. The monitoring data may be received from the wind turbines and the control signals may also be supplied to the wind turbines. The wind turbines may either by themselves capable to calculate the closeness or the closeness level or may provide raw data to the control unit which by its own may calculate from the monitoring data and potentially other configuration data or operational limit data the respective closeness, in particular closeness level.

According to an embodiment it is provided a system, comprising: at least two wind turbines connected to a local isolated grid, in particular a wind park; an arrangement according to the preceding embodiment communicatively connected to the wind turbines.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a system according to an embodiment of the present invention;
Fig. 2 illustrates an example of a method scheme according to an embodiment of the present invention.

### Detailed Description

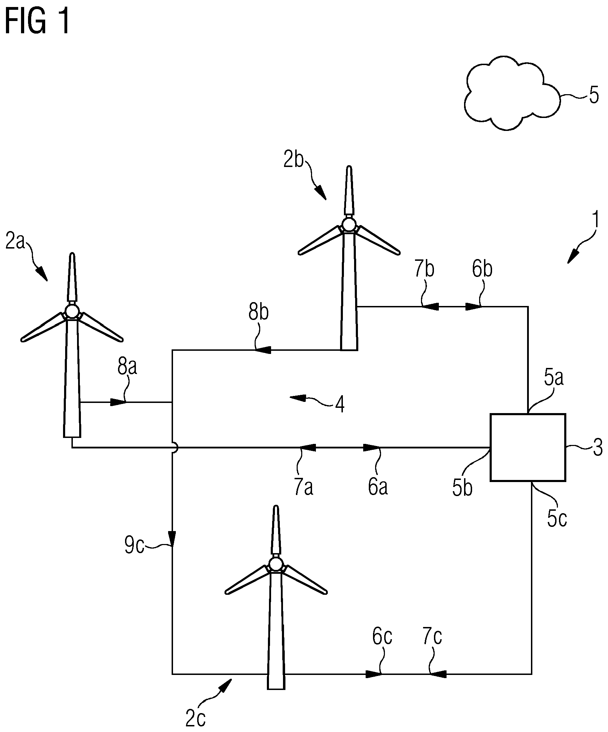

The system 1 schematically illustrated in **Fig. 1** comprises at least two wind turbines 2a, 2b, 2c, which may potentially with other wind turbines form a wind park or a subset of wind turbines of a wind park. Furthermore, the system 1 comprises an arrangement 3 according to an embodiment of the present invention for operating the plural wind turbines 2a, 2b, 2c which are connected with each other in a local grid 4 but which are disconnected from a utility grid 5. Thus, the wind turbines 2a, 2b, 2c are isolated from the utility grid 5 and thereby form an island. The local grid 4 may comprise one or more breakers which may allow to connect the different wind turbines 2a, 2b, 2c with each other and may comprise electronic components like cables, capacitors, resistors, breakers, transformers and the like.

The arrangement 3 comprises an input/output port 5a, 5b, 5c which is for receiving monitoring data 6a, 6b, 6c from the respective wind turbines 2a, 2b, 3c regarding at least one temporary stop requirement.

Furthermore, the arrangement 3 comprises a not in detail illustrated processor adapted to select one or more of the wind turbines based on a closeness to the respective temporary stop requirement.

Via the input/output ports 5a, 5b, 5c, the arrangement 3 supplies respective control signals 7a, 7b, 7c to the respective wind turbines in order to command the wind turbines to enter a non-idle state or an idle state. The arrangement selects one or more wind turbines to enter the non-idle state and sends a respective control signal to enter the non-idle state. To other wind turbines, the arrangement 3 may provide the respective control signal to enter or remain in an idle state.

The arrangement 3 is capable together with the wind turbines 2a, 2b, 2c to perform a method of operating plural wind turbines according to an embodiment of the present invention. Thereby, the method comprises to monitor the wind turbines 2a, 2b, 2c regarding at least one temporary stop requirement, wherein in the illustrated embodiment, the monitoring data 6a, 6b, 6c are obtained at the arrangement 3 from the respective wind turbines 2a, 2b, 2c. Then, the arrangement 3 selects one or more of the wind turbines based on a closeness to the respective temporary stop requirement (in particular derived based on the monitoring data 6a, 6b, 6c). Upon receiving the control signals 7a, 7b, 7c as supplied from the arrangement 3, the selected wind turbine(s) or the non-selected wind turbine(s) then enters a non-idle state thereby supplying power to the local grid. Supplying power can be understood as (one or) both active power for frequency support, and/or reactive power for ramping up the voltage or supporting an existing voltage in the local grid.

According to one embodiment, for example, the wind turbines 2a and 2b are selected to enter the non-idle state in order to provide power 8a, 8b into the microgrid or local grid 4. The wind turbine 2c has not been selected but remains in the idle state. For remaining in the idle state, however, the wind turbine 2c requires also electrical power 9c which is received from the local grid 4 which is powered by the wind turbines 2a, 2b.

The number of wind turbines, in the illustrated example 2, is selected such that the electrical power production supplied by the non-idle wind turbines 2a, 2b and the electrical power consumption by the idle wind turbine 2c is substantially balanced within the local grid 4.

The arrangement 3 may determine a closeness level or closeness score for the different wind turbines 2a, 2b, 2c based on the received monitoring data 6a, 6b, 6c. Using the closeness level, the wind turbines 2a, 2b, 2c may be set in a ranked order and the selection may be based on the ranked order. The wind turbine 2c which is in the idle state may then receive a temporary stop, such as lubrication of a gear system or a pitching system or a yawing system or an untwisting operation of a power cable.

Then, the monitoring data are updated and also the selection of wind turbines may be updated to define and command those which have a relatively high closeness score to enter or remain in the non-idle state for supplying electric energy and power to the local grid 4.

According to an embodiment of the present invention, the wind turbines calculate "how far" they are from needing to stop for one of the reasons mentioned above, i.e. to perform a temporary stop in particular involving a periodic service stop. The measure of how far they are from needing a stop may depend upon the threshold of an operation limit which is required to be avoided. This threshold may for example be an estimate in terms of time (hours, minutes) or an estimate in terms of degrees rotation before untwisting is needed.

On the site level, the park controller (an example of an implementation of the arrangement 3) may select the wind turbines that are farthest away from having to do a periodic service stop to reduce the risk of one of them impacting the operation of the small grid. Further, when the operation of the small grid is stable (in an electrical sense), the park controller or arrangement 3 may instruct the idling turbine(s) to increase their distance to the service stop condition. Thus, these wind turbines may in fact perform a temporary stop action. If one of the wind turbines which are non-idle (i.e. producing and supplying power to the local grid 4) is getting close to a stop condition, then the park controller or the arrangement 3 may start the idling turbine with the largest distance to its stop condition. Once that turbine has been started, the turbine with the shorter distance to the stop conditions may be stopped so entering an idle state. The active power used for increasing the idling turbines distance to a service stop is free as it is provided by the turbines in operation, i.e. the non-idling wind turbines. Increasing the distance to a service stop while in the island mode may tend to have a positive effect on the energy produced when connected to the electrical grid. The reason may be that the distance to the service stop could reduce the number of service stops a turbine has to do when connected to the local grid 4 allowing it to produce more active power.

The number of turbines needed to maintain the power island (in particular those which are in the non-idle state) may likely depend on the wind speed on the site and the number of turbines that can increase that distance to a service stop will likely also be wind speed dependent.

Embodiments of the present invention provide a proactive role in always monitoring the operating turbine's distance to service stops and when they are close, the idling turbines with the largest distance to the service stop may be started. Further, it may increase/optimize the idling turbines distance to the service stop. Thereby, the risk of operational turbines performing an unwanted service stop may be reduced or even avoided.

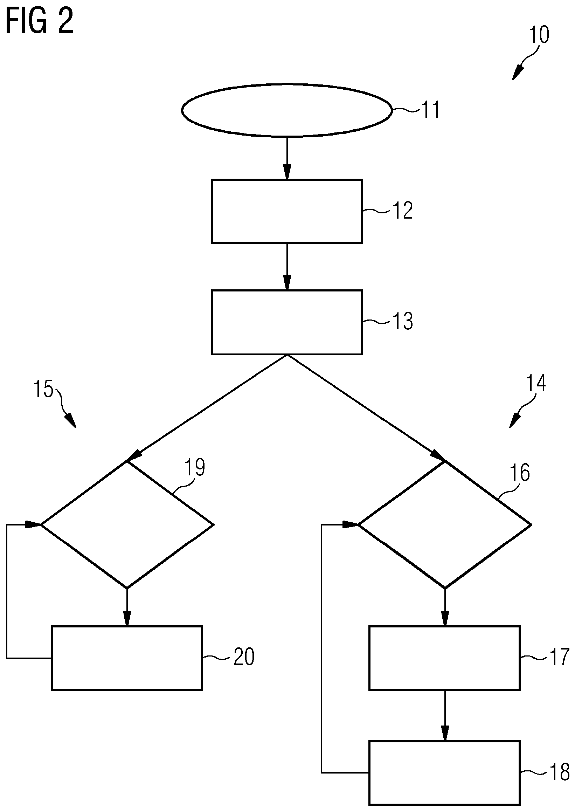

**Fig. 2** illustrates a method scheme 10 according to an embodiment of the present invention. The method is started at a start box 11. In a method step 12, N-turbines (N being an integer) are picked which have the largest distance to a service stop. In a method step 13, there is a waiting period for the local grid 4 to be stable in an electrical sense. In this waiting period, the picked N-turbines (or at least one turbine) supplies power to the local grid 4.

From method step 13, the method branches in two branches 14 and 15. In the branch 14 in an evaluation block 16it is checked whether an operational turbine (i.e. a non-idle wind turbine) is too close to a service stop. If the check is asserted, it is switched to the method step 17 in which the idling turbine(s) with the largest distance to the service stop is started. In a next method step 18, once the turbine is started, the turbine with the closest distance is stopped and is instructed to increase the distance to the service stop (for example by performing a temporary stop action). From method step 18 it is switched back to the evaluation block 16.

In the second branch 15, an evaluation block 19 evaluates if the idle wind turbine(s) is close to the service stop. If this is the case, it is switched to the method block 20. In method step 20, x (x being an integer) wind turbines having the smallest distance to the service stop are instructed to increase the distance to the service stop, for example by performing one or more temporary stop operations. In method step 20 it is switched back to the evaluation block 19.

The method scheme 10 illustrated in Fig. 2 is only an example of a particular embodiment of the present invention. According to other embodiments, one or more of the method steps illustrated in Fig. 2 may be omitted.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of operating plural wind turbines (2a,2b,2c) connected to a local grid (4) but isolated from any power providing utility grid (5), the method comprising:
monitoring (6a,6b,6c) the wind turbines (2a,2b,2c) regarding at least one temporary stop requirement;
selecting one or more of the wind turbines (2a,2b,2c) based on a closeness to the respective temporary stop requirement, in particular the lower the closeness the more urgent the temporary stop, where the closeness is based on or is determined based on at least one of a remaining time duration until a next temporary stop of at least one component will be required, and/or an elapsed time since a previous temporary stop of at least one component was performed;
entering, by at least one selected wind turbine (2a,2b) or by at least one non-selected wind turbine, a non-idle state thereby suppling power to the local grid.

2. Method according to the preceding claim, further comprising at least one of:
establishing a ranked order of the wind turbines (2a,2b,2c) based on the closeness, in particular a closeness level, of the wind turbines;
selecting wind turbines (2a,2b) to enter the non-idle state based on the ranked order;
choosing wind turbines (2c) to enter the idle state and/or to perform maintenance based on the ranked order.

3. Method according to one of the preceding claims, further comprising at least one of:
operating non-selected wind turbines (2c), if any, in an idle-state thereby not suppling power to the local grid; and
receiving power (9c) from the local grid (4) at at least one of the idle wind turbines (2c).

4. Method according to one of the preceding claims, wherein selecting one or more of the wind turbines (2a,2b,2c) comprises:
selecting one or more of the wind turbines (2a,2b) whose closeness to the respective temporary stop requirement is greatest or greater than a threshold, the threshold in particular depending on a wind speed and/or total number of wind turbines.

5. Method according to one of the preceding claims, wherein selecting one or more of the wind turbines (2a,2b,2c) comprises:
selecting a number of one or more of the wind turbines (2a,2b,2c) such that electrical power production supplied by the non-idle wind turbines (2a,2b) and electrical power consumption by the idle wind turbines (2c) is substantially balanced within the local grid (4),
wherein in particular the number of wind turbines supplying power to the local grid depends on wind speed.

6. Method according to one of the preceding claims, further comprising:
determining, for each of the wind turbines (2a,2b,2c), a closeness level and/or closeness score based on respective the temporary stop requirement;
selecting one or more of the wind turbines (2a,2b,2c) based on the closeness level; and/or
establishing a ranked order of the wind turbines (2a,2b,2c) based on the closeness level, of the wind turbines,
wherein the closeness level is a binary quantity or is quantized in more than two values, in particular in a continuous manner.

7. Method according to the preceding claim, wherein the closeness score or closeness level respects a weighting of several components or wind turbines regarding predictability and/or importance and/or vulnerability.

8. Method according to one of the two preceding claims, wherein the closeness level of the temporary stop requirement is based on or is determined based on at least one of:
a remaining time duration until a next temporary stop of at least one component will be required;
an elapsed time since a previous temporary stop of at least one component was performed;
a remaining load level at least one component can be subjected to in the future;
an accumulated load level at least one component was subjected to (in the past);
an amount of degrees of rotation the nacelle was rotated, since a previous untwist operation;
an amount of degrees of rotation the nacelle can be rotated in the future, until a next untwist operation will be required,
wherein the closeness level respects in particular at least one operation threshold,
in particular operation time threshold and/or wear level threshold.

9. Method according to one of the preceding claims, wherein monitoring the wind turbines (2a,2b,2c) regarding at least one temporary stop requirement comprises at least one of:
receiving measurement data regarding an operation state and/or performance and/or lifetime of at least one wind turbine component;
receiving at least one operation threshold regarding operation of the component;
determining the closeness level based on the measurement data and/or the operation threshold.

10. Method according to one of the preceding claims, wherein the temporary stop includes at least one of:
lubrication of at least one component of the wind turbine, in particular a gear system and/or a pitching system and/or a yawing system;
untwisting a power cable, in particular arranged in a wind turbine tower;
stopping the wind turbine;
performing temporary stop on at least one component of the wind turbine.

11. Method according to one of the preceding claims, further comprising at least one of, in particular if the local grid is electrically stable:
performing temporary stop for at least one idle wind turbine (2c), in particular in a ranked order giving priority to those that having smallest closeness level;
updating the closeness level of the idle wind turbine (2c) after having performed the temporary stop, in particular updating the rank of the wind turbine in the ordered list, wherein performing the temporary stop of a wind turbine in particular increases the closeness level, thereby lowering urgency level for temporary stop of the respective wind turbine.

12. Method according to one of the preceding claims, further comprising at least one of, in particular in a regular manner:
updating closeness level of the wind turbines (2a, 2b, 2c) ;
updating selection of the wind turbines (2a,2b,2c) to enter non-idle state;
supplying power (8a, 8b) to the local grid (4) by wind turbines according to updated selection and/or updated closeness level;
performing temporary stop of at least one idle wind turbine (2c) based on the updated closeness level.

13. Method according to one of the preceding claims,
wherein the plural wind turbines (2a,2b,2c) comprise one of:
two or more wind turbines;
a subset of wind park wind turbines;
all wind turbines of a wind park;
and/or
wherein the idle-state of wind turbine includes at least one of:
wind turbine is stopped;
rotor is slowly rotating;
wind turbine does not supply power to the local grid;
and/or
the closeness level indicates at least one of:
a "distance" to a next temporary stop;
an urgency level for performing a temporary stop.

14. Arrangement (3) for operating plural wind turbines (2a,2b,2c) connected to a local grid (4) but disconnected from a utility grid (5), the arrangement comprising:
an input port (5a,5b,5c) for receiving monitoring data (6a,6b,6c) of the wind turbines regarding at least one temporary stop requirement;
a processor adapted to select one or more of the wind turbines based on a closeness to the respective temporary stop requirement;
an output port (5a,5b,5c) for supplying a control signal (7a,7b,7c) to at least one selected wind turbine or to at least one non-selected wind turbine, to enter a non-idle state thereby suppling power to the local grid.

15. System (1), comprising:
at least two wind turbines (2a,2b,2c) connected to a local isolated grid (4), in particular a wind park;
an arrangement (3) according to the preceding claim communicatively connected to the wind turbines (2a,2b,2c).

## Patentansprüche

1. Verfahren zum Betreiben einer Vielzahl von Windturbinen (2a,2b,2c), die mit einem lokalen Netz (4) verbunden, jedoch von einem beliebigen leistungsbereitstellenden Versorgungsnetz (5) isoliert ist, wobei das Verfahren Folgendes umfasst:
Überwachen (6a,6b,6c) der Windturbinen (2a,2b,2c) hinsichtlich mindestens eines temporären Anhalteerfordernisses;
Auswählen einer oder mehrerer der Windturbinen (2a,2b,2c) basierend auf einer Nähe zu dem jeweiligen temporären Anhal0teerfordernis, wobei insbesondere je geringer die Nähe ist, umso dringender das temporäre Anhalten ist, wobei die Nähe auf mindestens einer von einer verbleibenden Zeitdauer, bis ein nächstes temporäres Anhalten mindestens einer Komponente erforderlich sein wird, und/oder einer verstrichenen Zeit, seitdem ein vorheriges temporäres Anhalten mindestens einer Komponente durchgeführt wurde, basiert oder auf dieser basierend bestimmt wird;
Eintreten, durch mindestens eine ausgewählte Windturbine (2a,2b) oder durch mindestens eine nicht ausgewählte Windturbine, in einen Nicht-Leerlaufzustand, wodurch dem lokalen Netz Leistung zugeführt wird.

2. Verfahren nach dem vorhergehenden Anspruch, ferner umfassend mindestens eines von Folgendem:
Herstellen einer Rangfolge der Windturbinen (2a,2b,2c) basierend auf der Nähe, insbesondere einem Näheniveau, der Windturbinen;
Auswählen von Windturbinen (2a,2b), um in den Nicht-Leerlaufzustand einzutreten, basierend auf der Rangfolge;
Wählen von Windturbinen (2c), um in den Leerlaufzustand einzutreten und/oder eine Wartung durchzuführen, basierend auf der Rangfolge.

3. Verfahren nach einem der vorhergehenden Ansprüche, ferner umfassend mindestens eines von Folgendem:
Betreiben nicht ausgewählter Windturbinen (2c), falls vorhanden, in einem Leerlaufzustand, wodurch dem lokalen Netz keine Leistung zugeführt wird; und
Empfangen von Leistung (9c) von dem lokalen Netz (4) an mindestens einer der leerlaufenden Windturbinen (2c).

4. Verfahren nach einem der vorhergehenden Ansprüche, wobei das Auswählen einer oder mehrerer der Windturbinen (2a,2b,2c) Folgendes umfasst:
Auswählen einer oder mehrerer der Windturbinen (2a,2b), deren Nähe zu dem jeweiligen temporären Anhalteerfordernis am größten oder größer als ein Schwellenwert ist, wobei der Schwellenwert insbesondere von einer Windgeschwindigkeit und/oder einer Gesamtanzahl an Windturbinen abhängt.

5. Verfahren nach einem der vorhergehenden Ansprüche, wobei das Auswählen einer oder mehrerer der Windturbinen (2a,2b,2c) Folgendes umfasst:
derartiges Auswählen einer Anzahl an einer oder mehreren der Windturbinen (2a,2b,2c), dass eine Produktion elektrischer Leistung, die durch die nicht leerlaufenden Windturbinen (2a,2b) zugeführt wird, und ein Verbrauch elektrischer Leistung durch die leerlaufenden Windturbinen (2c) im Wesentlichen innerhalb des lokalen Netzes (4) ausgeglichen sind,
wobei insbesondere die Anzahl an Windturbinen, die dem lokalen Netz Leistung zuführt, von der Windgeschwindigkeit abhängt.

6. Verfahren nach einem der vorhergehenden Ansprüche, ferner umfassend:
Bestimmen, für jede der Windturbinen (2a,2b,2c), eines Näheniveaus und/oder eines Nähepunktwerts basierend auf jeweils dem temporären Anhalteerfordernis;
Auswählen einer oder mehrerer der Windturbinen (2a,2b,2c) basierend auf dem Näheniveau; und/oder
Herstellen einer Rangfolge der Windturbinen (2a,2b,2c) basierend auf dem Näheniveau der Windturbinen, wobei das Näheniveau eine binäre Quantität ist oder, insbesondere in einer kontinuierlichen Weise, in mehr als zwei Werten quantisiert wird.

7. Verfahren nach dem vorhergehenden Anspruch, wobei der Nähepunktwert oder das Näheniveau eine Gewichtung mehrerer Komponenten oder Windturbinen hinsichtlich einer Vorhersagbarkeit und/oder einer Wichtigkeit und/oder einer Anfälligkeit berücksichtigt.

8. Verfahren nach einem der zwei vorhergehenden Ansprüche, wobei das Näheniveau des temporären Anhalteerfordernisses auf mindestens einem von Folgendem basiert oder auf diesem basierend bestimmt wird:
einer verbleibenden Zeitdauer, bis ein nächstes temporäres Anhalten mindestens einer Komponente erforderlich sein wird;
einer verstrichenen Zeit, seitdem ein vorheriges temporäres Anhalten mindestens einer Komponente durchgeführt wurde;
einem verbleibenden Lastniveau, dem mindestens eine Komponente künftig ausgesetzt werden kann;
einem akkumulierten Lastniveau, dem mindestens eine Komponente (in der Vergangenheit) ausgesetzt wurde;
einer Menge an Drehungsgraden, um welche die Gondel seit einem vorherigen Entdrallbetrieb gedreht wurde;
einer Menge an Drehungsgraden, um welche die Gondel künftig gedreht werden kann, bis ein nächster Entdrallbetrieb erforderlich sein wird,
wobei das Näheniveau insbesondere einen Betriebsschwellenwert, insbesondere einen Betriebszeitschwellenwert und/oder einen Verschleißniveauschwellenwert berücksichtigt.

9. Verfahren nach einem der vorhergehenden Ansprüche, wobei das Überwachen der Windturbinen (2a,2b,2c) hinsichtlich mindestens eines temporären Anhalteerfordernisses mindestens eines von Folgendem umfasst:
Empfangen von Messdaten hinsichtlich eines Betriebszustands und/oder einer Leistungsfähigkeit und/oder eine Lebensdauer mindestens einer Windturbinenkomponente;
Empfangen mindestens eines Betriebsschwellenwerts hinsichtlich des Betriebs der Komponente;
Bestimmen des Näheniveaus basierend auf den Messdaten und/oder dem Betriebsschwellenwert.

10. Verfahren nach einem der vorhergehenden Ansprüche, wobei das temporäre Anhalten mindestens eines von Folgendem beinhaltet:
einer Schmierung mindestens einer Komponente der Windturbine, insbesondere eines Gangsystems und/oder eines Neigungssystems und/oder eines Giersystems;
Entdrallen eines Leistungskabels, das insbesondere in einem Windturbinenturm angeordnet ist;
Anhalten der Windturbine;
Durchführen eines temporären Anhaltens an mindestens einer Komponente der Windturbine.

11. Verfahren nach einem der vorhergehenden Ansprüche, ferner umfassend mindestens eines von Folgendem, insbesondere wenn das lokale Netz elektrisch stabil ist:
Durchführen eines temporären Anhaltens für mindestens eine leerlaufende Windturbine (2c), insbesondere in einer Rangfolge, die denjenigen Vorrang gewährt, die ein kleinstes Näheniveau aufweisen;
Aktualisieren des Näheniveaus der leerlaufenden Windturbine (2c), nachdem das temporäre Anhalten durchgeführt wurde, insbesondere Aktualisieren des Ranges der Windturbine in der geordneten Liste, wobei das Durchführen des temporären Anhaltens einer Windturbine insbesondere das Näheniveau erhöht, wodurch das Dringlichkeitsniveau für das temporäre Anhalten der jeweiligen Windturbine abgesenkt wird.

12. Verfahren nach einem der vorhergehenden Ansprüche, ferner umfassend mindestens eines von Folgendem, insbesondere in einer regelmäßigen Weise:
Aktualisieren des Näheniveaus der Windturbinen (2a,2b,2c);
Aktualisieren der Auswahl der Windturbinen (2a,2b,2c), um in den Nicht-Leerlaufzustand einzutreten;
Zuführen von Leistung (8a, 8b) zu dem lokalen Netz (4) durch Windturbinen gemäß der aktualisierten Auswahl und/oder dem aktualisierten Näheniveau;
Durchführen des temporären Anhaltens mindestens einer leerlaufenden Windturbine (2c) basierend auf dem aktualisierten Näheniveau.

13. Verfahren nach einem der vorhergehenden Ansprüche, wobei die Vielzahl von Windturbinen (2a,2b,2c) eines von Folgendem umfasst:
zwei oder mehreren Windturbinen;
einem Teilsatz von Windparkwindturbinen;
allen Windturbinen eines Windparks;
und/oder
wobei der Windturbinenleerlaufzustand mindestens eines von Folgendem beinhaltet:
die Windturbine ist angehalten;
der Rotor dreht sich langsam;
die Windturbine führt dem lokalen Netz keine Leistung zu;
und/oder
das Näheniveau mindestens eines von Folgendem angibt:
einem "Abstand" zu einem nächsten temporären Anhalten;
einem Dringlichkeitsniveau zum Durchführen eines temporären Anhaltens.

14. Anordnung (3) zum Betreiben einer Vielzahl von Windturbinen (2a,2b,2c), die mit einem lokalen Netz (4) verbunden, jedoch von einem Versorgungsnetz (5) getrennt ist, wobei die Anordnung Folgendes umfasst:
einen Eingangsanschluss (5a,5b,5c) zum Empfangen von Überwachungsdaten (6a,6b,6c) der Windturbinen hinsichtlich mindestens eines temporären Anhalteerfordernisses;
einen Prozessor, der dazu angepasst ist, eine oder mehrere der Windturbinen basierend auf einer Nähe zu dem jeweiligen temporären Anhalteerfordernis auszuwählen;
einen Ausgangsanschluss (5a,5b,5c) zum Zuführen eines Steuersignals (7a,7b,7c) zu mindestens einer ausgewählten Windturbine oder zu mindestens einer nicht ausgewählten Windturbine, um in einen Nicht-Leerlaufzustand einzutreten, wodurch dem lokalen Netz Leistung zugeführt wird.

15. System (1), umfassend:
mindestens zwei Windturbinen (2a,2b,2c), die mit einem lokalen isolierten Netz (4), insbesondere einem Windpark, verbunden sind;
eine Anordnung (3) nach dem vorhergehenden Anspruch, die kommunikativ mit den Windturbinen (2a,2b,2c) verbunden ist.

## Revendications

1. Procédé de fonctionnement de plusieurs éoliennes (2a,2b,2c) reliées à un réseau local (4) mais isolées de tout réseau public d'alimentation électrique (5), le procédé comprenant :
la surveillance (6a,6b,6c) des éoliennes (2a,2b,2c) concernant au moins une exigence d'arrêt temporaire ;
la sélection d'une ou plusieurs des éoliennes (2a,2b,2c) en fonction d'une proximité avec l'exigence d'arrêt temporaire respective, en particulier, plus la proximité est faible, plus l'arrêt temporaire est urgent, dans lequel la proximité est en fonction de, ou est déterminée en fonction de, au moins un élément parmi une durée restante jusqu'à ce qu'un prochain arrêt temporaire d'au moins un composant soit requis, et/ou un temps écoulé depuis qu'un précédent arrêt temporaire d'au moins un composant a été effectué ;
le passage d'au moins une éolienne sélectionnée (2a,2b) ou d'au moins une éolienne non sélectionnée à un état de non-veille, fournissant ainsi de l'énergie au réseau local.

2. Procédé selon la revendication précédente, comprenant en outre au moins une des étapes parmi :
l'établissement d'un ordre classé des éoliennes (2a,2b,2c) en fonction de la proximité, en particulier d'un niveau de proximité, des éoliennes ;
la sélection d'éoliennes (2a,2b) devant passer à l'état de non-veille en fonction de l'ordre classé ;
le choix d'éoliennes (2c) devant passer à l'état de veille et/ou devant effectuer une maintenance en fonction de l'ordre classé.

3. Procédé selon l'une des revendications précédentes, comprenant en outre au moins une des étapes parmi :
le fonctionnement d'éoliennes non sélectionnées (2c), le cas échéant, dans un état de veille, ne fournissant ainsi pas d'énergie au réseau local ; et
la réception d'énergie (9c) en provenance du réseau local (4) au niveau d'au moins une des éoliennes en veille (2c).

4. Procédé selon l'une des revendications précédentes, dans lequel la sélection d'une ou plusieurs des éoliennes (2a,2b,2c) comprend :
la sélection d'une ou plusieurs des éoliennes (2a,2b) dont la proximité avec l'exigence d'arrêt temporaire respective est la plus grande à un seuil ou est supérieure à celui-ci, le seuil dépendant en particulier d'une vitesse du vent et/ou d'un nombre total d'éoliennes.

5. Procédé selon l'une des revendications précédentes, dans lequel la sélection d'une ou plusieurs des éoliennes (2a,2b,2c) comprend :
la sélection d'un nombre d'une ou plusieurs éoliennes (2a,2b,2c) de sorte que la production d'énergie électrique fournie par les éoliennes non en veille (2a,2b) et la consommation d'énergie électrique par les éoliennes en veille (2c) soient sensiblement équilibrées au sein du réseau local (4),
dans lequel, en particulier, le nombre d'éoliennes fournissant de l'énergie au réseau local dépend de la vitesse du vent.

6. Procédé selon l'une des revendications précédentes, comprenant en outre :
la détermination, pour chacune des éoliennes (2a,2b,2c), d'un niveau de proximité et/ou d'un score de proximité en fonction de l'exigence d'arrêt temporaire respective ;
la sélection d'une ou plusieurs des éoliennes (2a,2b,2c) en fonction du niveau de proximité ; et/ou
l'établissement d'un ordre classé des éoliennes (2a,2b,2c) en fonction du niveau de proximité des éoliennes, dans lequel le niveau de proximité est une quantité binaire ou est quantifié en plus de deux valeurs, en particulier d'une manière continue.

7. Procédé selon la revendication précédente, dans lequel le score de proximité ou le niveau de proximité tient compte d'une pondération de plusieurs composants ou éoliennes concernant la prévisibilité et/ou l'importance et/ou la vulnérabilité.

8. Procédé selon une des deux revendications précédentes, dans lequel le niveau de proximité de l'exigence d'arrêt temporaire est en fonction de, ou est déterminé en fonction de, au moins un élément parmi :
une durée restante jusqu'à ce qu'un prochain arrêt temporaire d'au moins un composant soit requis ;
un temps écoulé depuis qu'un précédent arrêt temporaire d'au moins un composant a été effectué ;
un niveau de charge restant auquel au moins un composant pourra être soumis à l'avenir ;
un niveau de charge cumulé auquel au moins un composant a été soumis (dans le passé) ;
un nombre de degrés de rotation dont la nacelle a tourné, depuis une opération de détorsion précédente ;
un nombre de degrés de rotation dont la nacelle pourra tourner à l'avenir, jusqu'à ce qu'une prochaine opération de détorsion soit requise,
dans lequel le niveau de proximité respecte en particulier au moins un seuil de fonctionnement, en particulier un seuil de temps de fonctionnement et/ou un seuil de niveau d'usure.

9. Procédé selon l'une des revendications précédentes, dans lequel la surveillance des éoliennes (2a,2b,2c) concernant au moins une exigence d'arrêt temporaire comprend au moins l'une des étapes parmi :
la réception de données de mesure concernant un état de fonctionnement et/ou une performance et/ou une durée de vie d'au moins un composant d'éolienne ;
la réception d'au moins un seuil de fonctionnement concernant le fonctionnement du composant ;
la détermination du niveau de proximité en fonction des données de mesure et/ou du seuil de fonctionnement.

10. Procédé selon l'une des revendications précédentes, dans lequel l'arrêt temporaire comprend au moins une des étapes parmi :
la lubrification d'au moins un composant de l'éolienne, en particulier d'un système d'engrenages et/ou d'un système de calage des pales et/ou d'un système d'orientation de la nacelle ;
la détorsion d'un câble d'alimentation, en particulier agencé dans une tour d'éolienne ;
l'arrêt de l'éolienne ;
la réalisation d'un arrêt temporaire sur au moins un composant de l'éolienne.

11. Procédé selon l'une des revendications précédentes, comprenant en outre au moins l'une des étapes parmi, en particulier si le réseau local est électriquement stable :
la réalisation d'un arrêt temporaire pour au moins une éolienne en veille (2c), en particulier dans un ordre classé donnant la priorité à celles ayant le niveau de proximité le plus faible ;
la mise à jour du niveau de proximité de l'éolienne en veille (2c) après avoir effectué l'arrêt temporaire, en particulier la mise à jour du rang de l'éolienne dans la liste ordonnée, dans lequel la réalisation de l'arrêt temporaire d'une éolienne augmente en particulier le niveau de proximité, réduisant ainsi le niveau d'urgence pour l'arrêt temporaire de l'éolienne respective.

12. Procédé selon l'une des revendications précédentes, comprenant en outre au moins l'une des étapes parmi, en particulier d'une manière régulière :
la mise à jour du niveau de proximité des éoliennes (2a,2b,2c) ;
la mise à jour de la sélection des éoliennes (2a,2b,2c) pour passer à l'état de non-veille ;
la fourniture d'énergie (8a, 8b) au réseau local (4) par des éoliennes selon la sélection mise à jour et/ou le niveau de proximité mis à jour ;
la réalisation d'un arrêt temporaire d'au moins une éolienne en veille (2c) en fonction du niveau de proximité mis à jour.

13. Procédé selon l'une des revendications précédentes, dans lequel les plusieurs éoliennes (2a,2b,2c) comprennent un élément parmi :
deux éoliennes ou plus ;
un sous-ensemble d'éoliennes de parc éolien ;
toutes les éoliennes d'un parc éolien ;
et/ou
dans lequel l'état de veille d'une éolienne comprend au moins un élément parmi :
l'éolienne est arrêtée ;
le rotor tourne lentement ;
l'éolienne ne fournit pas d'énergie au réseau local ;
et/ou
le niveau de proximité indique au moins un élément parmi :
une « distance » par rapport à un prochain arrêt temporaire ;
un niveau d'urgence pour la réalisation d'un arrêt temporaire.

14. Agencement (3) pour le fonctionnement de plusieurs éoliennes (2a,2b,2c) reliées à un réseau local (4) mais déreliées d'un réseau public d'alimentation électrique (5), l'agencement comprenant :
un port d'entrée (5a,5b,5c) pour la réception de données de surveillance (6a,6b,6c) des éoliennes concernant au moins une exigence d'arrêt temporaire ;
un processeur adapté pour sélectionner une ou plusieurs des éoliennes en fonction d'une proximité avec l'exigence d'arrêt temporaire respective ;
un port de sortie (5a,5b,5c) pour la fourniture d'un signal de commande (7a,7b,7c) à au moins une éolienne sélectionnée ou à au moins une éolienne non sélectionnée, pour qu'elle passe dans un état de non-veille, fournissant ainsi de l'énergie au réseau local.

15. Système (1), comprenant :
au moins deux éoliennes (2a,2b,2c) reliées à un réseau local isolé (4), en particulier un parc éolien ;
un agencement (3) selon la revendication précédente relié de manière communicative aux éoliennes (2a,2b,2c).
